# EUROPEAN PATENT APPLICATION

(11) **EP 1 072 449 A2**
(43) Date of publication of application: **31.01.2001**
(21) Application number: 00115712.2
(22) Date of filing: 21.07.2000
(51) Int. Cl.: B60C 29/00, B60C 29/06

(54) **Fastening device for tyre pump extensions**

(30) Priority: 26.07.1999 IT MI991647
(71) Applicant: BRIDGEPORT BRASS S.P.A., I-24036 Ponte San Pietro (IT)
(72) Inventor: Fratus, Roberto, 25036 Palazzolo Sull Oglio (Brescia) (IT); Leo, Leonardo, 25065 Lumezzane (Brescia) (IT)
(74) Representative: Petruzziello, Aldo

(57) **Abstract**

A fastening device (1) for tyre pump extensions, fitted to tyre rims (51) which comprise at least one hole (50), the fastening device fitting, by attachment means (25) and the action of spring means (30), into diametrically opposite edges of said hole (50) made in the tyre rim (51) and including support means (8) adapted to support, in the outer part of the wheel, at least one valve (80) of a pipe fitting connected to the tyre inflation valve, said support means (8) being rotationally fitted to the body of the fitting device so they can be adjusted in position.

## Description

The present invention refers to a fastening device for tyre pump extensions. Commercial vehicles such as lorries with trailers, articulated lorries and articulated buses and similar, must use large sized tyres, in order to have better drive and road holding properties and withstand the vehicle weight. For this purpose, twin wheels are often used, i.e. two wheels fitted to each axle end of the vehicle.

Large sized tyres have an internally situated inflation valve in the wheel, in a position which is difficult for the user to reach, as he must operate from the exterior of the wheel. In particular, the tyre inflation valve of the inside wheel of the twin wheels is almost totally inaccessible to the operator. Therefore access to the tyre inflation valve, when it is necessary to inflate the tyre or check its pressure, would prove extremely difficult.

Presently, a flexible pipe fitting or extension is connected to the tyre inflation valve to overcome such problem, which ends in a valve which can be used by the tyre supply tube. So as to be accessible to the user, the pipe fitting valve is secured to the exterior part of the wheel by a fastening device, which is locked to the wheel rim.

Such a fastening device, according to the known art, is shown in Fig. 5 and is indicated, as a whole, by reference number 100. The fastening device 100 includes a body 101 made up of a basically U-shaped plate.

Fig. 5 shows a tyre rim 103 of a large sized wheel which envisages a large number of holes 102, one of which is shown in the figure. The body 101 of the fastening device 100 is fitted to a part of the edge of the tyre rim 103 which surrounds hole 102 and is fixed to the tyre rim by screws or bolts 104 which apply pressure to the tyre rim. A V-shaped channel 106 is welded or fixed by other means 105, to the body 101, whose end edges are bent back on each other so as to form two loops 107 able to receive the respective terminal valves 108 of pipe fittings connected to the respective tyre inflation valves.

This system, according to the known art, has several disadvantages. The fixing of the body 101 to the tyre rim 103 of the wheel proves rather difficult. In fact, special tools are required for the screw means 104 and such a fixing type often proves unsecure due to vibration of the tyre rim 103 which may loosen the screw means 104.

Furthermore, the fixing of the channel 106 to the body 101 of the fastening device is not very secure. In fact, the welded or fixed point 105 is often broken due to stress and external impact damage, resulting in the consequent detachment of the channel 106 from the body 101 of the fastening device.

The aim of the present invention is to eliminate such drawbacks by providing a fastening device for tyre pump extensions which is secure and easy to produce.

Another aim of the present invention is to provide such a versatile fastening device which may be adapted to any type and configuration of tyre rim and tyre inflation valve.

A further aim of the present invention is to provide such a fastening device which allows quick and easy fitting without the need for additional tools.

These aims are achieved according to the invention with the characteristics listed in the enclosed independent claim 1.

Additional characteristics of the invention are apparent from the dependent claim.

The fastening device, according to the invention, comprises a spring system by means of which it can be adapted to the various hole sizes and configurations present on the wheel rims. Hence the user, by manually pressing the spring means, shortens the length of the fastening device so as to adapt it to the rim hole size. When the user releases the spring means the fastening device expands, locking it diametrically into the rim hole.

In addition, according to an embodiment of the invention, the inflation valve slot seats are made in the body of the fastening device, thus avoiding potential breakages. Such seats have a configuration which is especially suited to receive pump extensions of different sizes.

The slot seats of the extension valve can be rotationally fitted to a pin to allow the angular adjustment of such, so as to place them in the most suitable position.

Further characteristics of the invention will be made clearer from the detailed description which follows, referring to a purely illustrative embodiment, and hence non-limiting, shown in the enclosed drawings in which:
Fig. 1 is a plan view of a fastening device according to the invention;
Fig. 1A is an enlarged partial view, partially sectioned, of Fig. 1, in which the parts which are not visible are shown by a dotted line;
Fig. 2 is a side section view taken in the direction of the arrow F of Fig. 1;
Fig. 3 is a view from the left end of the fastening device of Fig. 1;
Fig. 4 is a reduced scale plan view, of the fastening device of Fig. 1 applied to a hole of a wheel rim;
Fig. 5 is a plan view of a fastening device, according to known technique, applied to a hole of a wheel rim;

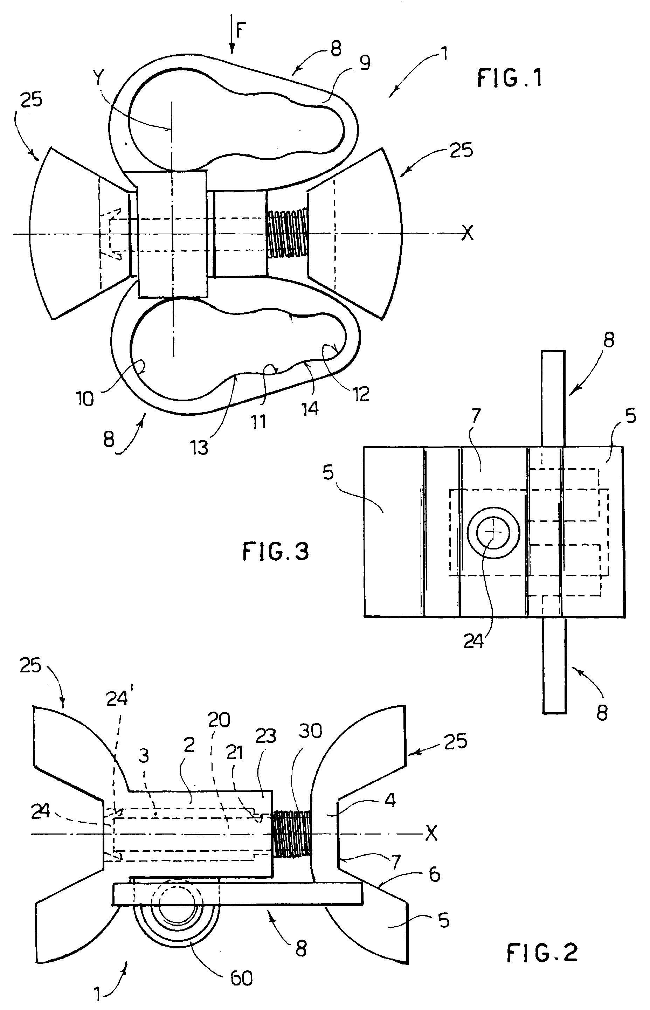

Figs. 1 to 4 are used to help describe a fastening device for tyre pump extensions according to the invention.

The fastening device, according to the invention, indicated as a whole by reference number 1, includes a basically cylindrical body 2 connected to a piston 20. Inside the body 2 is a cylindrical chamber 3 in which the piston 20 can slide. A circular opening 21 is envisaged, communicating with chamber 3 at one end 23 of the body 2. The opening 21 has a smaller diameter than the chamber 3 and slightly bigger or equal to that of the piston 20. In this way, the piston 20 can be inserted in the chamber 3 through the opening 21.

There is a stopping means 24 which acts as a limit stop at the end of piston 20 in the chamber 3. The stopping means 24 is of expansion type with flexible tabs 24' which, upon contact with the end 23 of the body, stop the piston 20 from coming out of the cylindrical body 2. Insertion of the piston 20 into chamber 3 is in fact made possible by the elasticity of the flexible tabs 24'.

At the opposite free ends of the cylindrical body 2 and piston 20 are envisaged respective attachment means 25. Each attachment means 25 includes a respective basically rectangular shaped plate 4, respectively located at the end of the cylindrical body 2 and piston 20. Each rectangular plate 4 is basically at a right angle to the axis of the cylindrical body 2, indicated by X.

Between the end 23 of the body 2 and plate 4, situated at the end of the piston 20, are envisaged spring means 30 which press on plate 4 of piston 20, pushing the piston 4 into a position outside the chamber 3 of body 2. In this position, with the piston outside chamber 3 of body 2, the stopping means 24 hits against the end 23 of the cylindrical body 2, preventing detachment of the piston 20 from the body 2.

Two partitions 5 project from each plate 4 so as to form a cavity 6 opening outwards. The cavity 6 is internally tapered and ends in a base 7 which is basically parallel to the surface of plate 4.

There are two seats 8 opposite each other, rotationally fitted in a bush 60, integral with the cylindrical body 2. Each seat 8 presents a basically elliptical peripheral part 9 which delimits an internal loop formed by three tangentially communicating circular holes 10, 11 and 12 of decreasing diameters respectively. An initial contraction 13 separates hole 10 from hole 11 and a second contraction 14 separates hole 11 from hole 12.

As better illustrated in Fig. 1A, the bush 60 is basically cylindrically shaped and internally hollow to accept an expansion pin 61 (shown in line form), its end terminating in flexible tabs 62. Each seat 8 has an internally hollow cylindrical tang 63 with two communicating cylindrical slots 64 and 65. The first slot 64 has a bigger diameter than the more external second slot 65.

Each tang 63 comes into contact with a respective end of the bush 60, forcing the tabs 62 of the pin end 61 so that the tabs are housed in slot 64 and hitting against the separation surfaces between the two slots 64 and 65, preventing tang 63 from being released from bush 60.

The bush 60 has an axis indicated by Y, basically at a right angle to the X-axis so that the two seats 8 can be independently rotated around the Y-axis to be placed in a suitable position.

Clearly, as an alternative, the seats 8 can be integral with the body 2, or preferably made in the body itself.

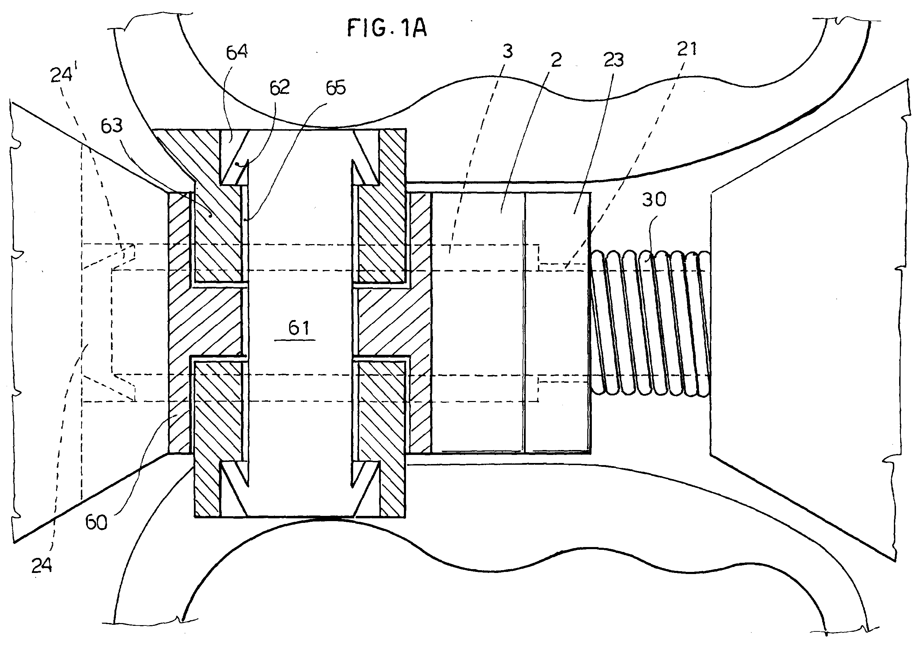

The following describes the fitting of the fastening device, according to the invention, with reference being made to Fig. 4.

The user manually holds the attachment means 25 of the fastening device 1 and compresses the spring means 30, causing the piston 20 to slide along the chamber 3 of the body 2 and thus shortening the overall length of the fastening device 1, enabling its diametrical insertion within a hole 50 of a wheel rim 51.

When the user releases the attachment means 25, the spring means 30, previously compressed, now springs back, and the piston 20 extends out of the chamber 3 of the body 2 causing the extension of the fastening device 1 so that the attachment means 25 do not come into contact with the part of the edge of the tyre rim 51 which surrounds the hole 50. Precisely, the respective cavities 6 of the attachment means 25 come into contact with two diametrically opposite edges of the tyre rim 51 surrounding the hole 50, and the fastening device 1 is diametrically positioned in hole 50. The cavities 6 of the attachment means 25 are specially tapered to favour contact with the edge parts of the tyre rim surrounding the hole 50, and to adapt itself to different tyre rim thicknesses.

The flat base 7 of cavity 6 is set like a chord on the circumferential surface of the edge of the tyre rim surrounding the hole 50. The expansion action of the spring means 30 pushes the respective bases 7 of the attachment means 25 into contact with the two diametrically opposite edge parts of the tyre rim 51 surrounding the hole 50, so as to prevent potential slippage of the fastening device 1.

A flexible pipe fitting, not shown, is connected to the tyre inflation valve. Such pipe fitting ends with a valve 80, with dimensions which allow it to be joined to a corresponding valve connected to a tube of a tyre pump system or tyre pressure checking system. The valve 80 of the pipe fitting is put in hole 10 of one of the two seats 8. The seats 8 are expressly made to rotate in the bush 60, around the Y-axis, to place them in a suitable position for the execution of such operation.

Depending on the dimensions of the valve 80, the same is forceably locked in hole 11 or hole 12 of seat 8. Hence the valve 80 of the pipe fitting is located in the front part of the tyre rim 51 and is easily reached by an operator.

The other seat 8 can clearly be used to receive the valve of another flexible pipe fitting connected to another wheel tyre valve, e.g; the internal wheel tyre in the case of twin wheels.

There are preferably two seats 8, made of plastic material, or preferably made in the cylindrical body 2 itself, so as to avoid breakage of the same due to stress and impact damage. Anyhow, a different number of these can be present, being produced separately and connected to body 2 by suitable fastening means.

The attachment means 25 can have a different configuration to that described and, for example, can be hooks which hook up to lyre rim 51. In this case the spring means can function by traction instead of by compression, ensuring the securing of the fastening device 1 to the tyre rim 51.

Elastic means are possible, in place of the spring means 30 which, in any case, perform the same function, ensuring the fitting of the fastening device 1 without the need for special tools.

Without leading away from the scope of the invention defined by the enclosed claims, it is possible for a skilled in the art to make additional changes and variations to the aforesaid embodiments.

## Claims

1. A fastening device (1) for tyre pump extensions, said tyres being fitted to tyre rims (51) which comprise at least one hole (50), said fastening device being fixed on said tyre rim (51) and including support means (8) suitable to support, in the exterior part of the tyre rim, at least one valve (80) of a pipe fitting or extension connected to the tyre inflation valve, characterised in that said fastening device (1) comes into contact, by attachment means (25), with the edges which are diametrically opposite said hole (50) made in the tyre rim (51).

2. A fastening device according to claim 1, characterised in that spring means (30) are envisaged, able to guarantee the contact of said fastening device (1) with edges opposite the hole (50) made in the tyre rim (51).

3. A fastening device according to claim 2, characterised in that it contains a hollow body (2) connected to a sliding piston (20) in said body (2), said piston (20) being connected to said body (2) by said spring means (30).

4. A fastening device according to claim 3, characterised in that said piston comprises stopping means (24) able to prevent its release from the body (2).

5. A fastening device according to claim 3, characterised in that said attachment means (25) are fitted at the free ends of said body (2) and said piston (20) and comprise a respective opening (6) able to come into contact with edges which are diametrically opposite said hole (50), made in the tyre rim (51).

6. A fastening device according to claim 5, characterised in that each said opening (6) is tapered to favour its contact with the edge of the hole in the tyre rim (51) and to adapt itself to different tyre rim thicknesses.

7. A fastening device according to anyone of claims from 3 to 6, characterised in that said support means (8) are rotationally fitted to the body (2) so they can be adjusted in position.

8. A fastening device according to claim 7, characterised in that each said support means (8) rotationally comes into contact with a respective end of a pin (61) fitted in a bush (60) integral with the body (2), so that each support means (8) can turn independently around the Y-axis of the pin (61).

9. A fastening device according to claim 8, characterised in that expansion means (62) are provided at the end of said pin, able to prevent the release of the support means (8).

10. A fastening device according to anyone of claims from 1 to 6, characterised in that said support means (8) are made integral with said body (2).

11. A fastening device according to any of the previous claims, characterised in that said support means (8) comprise tangentially communicating holes of decreasing diameter (10, 11, 12), to adapt the housing of said valve (60) of the pipe fitting to the tyre inflation valve.

12. A fastening device according to any of the previous claims, characterised in that said body (2) and/or said support means (8) are made of plastic.
